(19) Europäisches Patentamt
European Patent Office
Office européen des brevets

(11) Publication number: 0 171 225 B1

(12) # EUROPEAN PATENT SPECIFICATION

(45) Date of publication of patent specification: **25.03.92**

(51) Int. Cl.5: **C08F 297/04**, C08G 81/02, C09J 125/02

(21) Application number: **85305240.5**

(22) Date of filing: **23.07.85**

(54) **Pressure sensitive adhesive composition and intermediate copolymers for the preparation thereof.**

(30) Priority: **23.07.84 JP 152232/84**

(43) Date of publication of application:
**12.02.86 Bulletin 86/07**

(45) Publication of the grant of the patent:
**25.03.92 Bulletin 92/13**

(84) Designated Contracting States:
**DE GB IT NL**

(56) References cited:
**EP-A- 0 054 440**
**FR-A- 2 293 446**
**FR-A- 2 352 045**
**US-A- 3 265 765**
**US-A- 3 778 490**

(73) Proprietor: **SHELL INTERNATIONALE RESEARCH MAATSCHAPPIJ B.V.**
**Carel van Bylandtlaan 30**
**NL-2596 HR Den Haag(NL)**

(72) Inventor: **Iio, Akira**
**1-5-203, Morigayamacho**
**Yokkaichi-shi(JP)**
Inventor: **Muramori, Kunihiko**
**3-2, Agatagaoka-1-chome**
**Yokkaichi-shi(JP)**
Inventor: **Takeuchi, Mikio**
**69-1, Sasagawa-8-chome**
**Yokkaichi-shi(JP)**

EP 0 171 225 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a straight and/or branched chain, alkenyl aromatic compound-conjugated diene block copolymer coupled with a tin-based coupling agent and suitable for use in pressure-sensitive adhesives. It also provides a pressure-sensitive adhesive composition containing said coupled block copolymer. More particularly, this invention relates to a coupled block copolymer having (1) non-elastomeric blocks of an alkenyl aromatic compound polymer and (2) elastomeric blocks of a conjugated diene polymer or of a copolymer of a conjugated diene (main component) and an alkenyl aromatic compound, both being coupled with a tin-type coupling agent, and particularly suitable for use in hot-melt type pressure-sensitive adhesives.

Recently, in the field of hot-melt pressure sensitive adhesives, demand has increased for a thermoplastic elastomer having excellent adhesion-holdability, peeling strength and die-cuttability.

Processes for producing a straight and/or branched chain block copolymer of an alkenyl aromatic compound with a conjugated diene are known in the technical field of anionic polymerization and are disclosed in, for example, U.S. 3,465,065, 3,265,765 and 3,281,383. Block copolymers produced in accordance with these known processes, however, when used in pressure-sensitive adhesives, do not have a satisfactory balance between their initial adhesive strength, adhesion-holdability, peeling strength and die-cuttability.

Block copolymers produced according to known processes for use in pressure-sensitive adhesives are highly likely to undergo "blocking" during storage and form large lumps, and, accordingly, their handling in the production of a pressure-sensitive adhesive therefrom is difficult. In order to prevent this blocking phenomenon, anti-blocking agents, such as inorganic compounds (e.g. talc, calcium carbonate) or metallic soaps (e.g., sodium stearate, calcium stearate) have often been added to these block copolymers. However, pressure-sensitive adhesives produced from a block copolymer containing a large amount of such an anti-blocking agent possess reduced adhesion characteristics, particularly adhesion-holdability and peeling strength.

We have now found a block copolymer which undergoes no substantial blocking even when no anti-blocking agent is used, and which can provide a pressure-sensitive adhesive having excellent initial adhesive strength, adhesion-holdability, peeling strength and die-cuttability. This is achieved by a specific block copolymer coupled with a tin-containing coupling agent.

According to this invention, there is provided a coupled alkenyl aromatic compound-conjugated diene block copolymer having a total bound alkenyl aromatic compound content of from 3 to 70% by weight, having a weight average molecular weight of from 10,000 to 1,000,000; and represented by the general formula:

(1) $[(A\text{-}B)_m]_n$ X and/or

(2) $[(A\text{-}B\text{-}A')_m]_n$ X

wherein: A and A' are the same or different and each represents a block of an alkenyl aromatic compound polymer having a weight average molecular weight in the range of from 3,000 to 200,000; B represents a block of a conjugated diene polymer or a block of a conjugated diene-alkenyl aromatic compound copolymer having a proportion of conjugated diene of at least 50% by weight, said block having a weight average molecular weight in the range of from 7,000 to 700,000; X represents the residue of a tin-containing coupling agent or a mixture of the residue of a tin-containing coupling agent and the residue of a non-tin-containing coupling agent; the coupled block copolymer containing at least 20% by weight of a tin compound coupled alkenyl aromatic compound-conjugated diene block copolymer; and wherein X represents the residue of at least one coupling agent selected from stannous chloride, stannic chloride, stannous bromide, stannic bromide, stannous iodide, stannic iodide, stannous fluoride, stannic fluoride, methyltin trichloride, butyltin trichloride or dibutyltin dichloride; m is an integer of 1 or more; and n is an integer from 2 to 6 corresponding to the functionality of X.

The invention further provides an anti blocking, pressure-sensitive adhesive composition comprising:

(a) 100 parts by weight of a block copolymer containing at least 20% by weight of a coupled alkenyl aromatic compound-conjugated diene block copolymer having a total bound alkenyl aromatic compound content of from 3 to 70% by weight having a weight average molecular weight of from 10,000 to 1,000,000; and represented by the general formula:

$[(A\text{-}B)_m]_{n'}$-X and/or $[(A\text{-}B\text{-}A')_m]_{n'}$-X

wherein A, A', B and m are as defined above, X represents the residue of a tin-containing coupling agent or a mixture of the residue of a tin-containing coupling agent and the residue of a non-tin-containing coupling agent, the coupled block copolymer containing at least 20% by weight of a tin compound coupled alkenyl aromatic compound-conjugated diene block copolymer; and n' is an integer from 2 to 6 corresponding to the functionality of X;

(b) from 20 to 200 parts by weight of a tackifier;

(c) from 0 to 20 parts by weight of an organic acid; and

(d) from 0 to 100 parts by weight of a softener.

X contains preferably from 20 to 100 mol% of the residue of a tin-containing coupling agent.

The coupled block copolymer of this invention is a coupled straight and/or branched chain block copolymer obtained by copolymerizing an alkenyl aromatic compound and a conjugated diene compound, further polymerizing an alkenyl aromatic compound, if necessary, and subjecting the resulting polymers to coupling with at least a tin-containing coupling agent. The weight average molecular weight of the coupled block copolymer is more preferably from 50,000 to 700,000, and most preferably from 100,000 to 600,000. When the weight average molecular weight is less than 10,000, the pressure-sensitive adhesive composition of this invention has insufficient adhesion-holdability. When the weight average molecular weight exceeds 1,000,000, the composition has insufficient initial adhesive strength.

In the coupled block copolymer of this invention, the weight average molecular weight of the block of the alkenyl aromatic compound polymer is suitably from 3,000 to 200,000, preferably from 4,000 to 150,000, more preferably from 5,000 to 100,000, most preferably from 5,000 to 50,000. The weight average molecular weight of the block of the polymer of conjugated diene is suitably from 7,000 to 700,000, preferably from 10,000 to 500,000, more preferably from 10,000 to 300,000, most preferably from 10,000 to 200,000.

As mentioned above, the content of the bound alkenyl aromatic compound component in the coupled block copolymer is from 3 to 70% by weight. This content is preferably from 5 to 50% by weight, more preferably from 5 to 40% by weight. When the content is less than 3% by weight, a pressure-sensitive adhesive composition produced from the coupled block copolymer has insufficient adhesion-holdability and die-cuttability. When the content exceeds 70% by weight, the composition has insufficient initial adhesive strength.

The die-cuttability mentioned above is the property demonstrated below. In the production of pressure-sensitive adhesive labels, a pressure-sensitive adhesive sheet is stuck to a release paper; the resulting laminate is subjected to a punching die so that only the pressure-sensitive adhesive sheet is punched out in the desired label shapes; then the unnecessary portion of the sheet is stripped from the release paper. In this case, when the die-cuttability is poor, the sheet adheres to the die and even those portions necessary as pressure-sensitive adhesive lables are stripped from the release paper, or, when the uncut part of the pressure-sensitive adhesive sheet is stripped from the release paper, the adhesive labels are also stripped.

That this die-cuttability is poor is the biggest drawback of hot-melt type pressure-sensitive adhesives containing a thermoplastic block copolymer when they are utilized in pressure-sensitive adhesive labels.

When the tin-compound coupled block copolymer of this invention is used in admixture with an uncoupled block copolymer and/or a non-tin coupling agent coupled block copolymer, in order to obtain the effect of this invention, the coupled block copolymer of this invention should contain at least 20% by weight of a tin compound-coupled alkenyl aromatic compound-conjugated diene block copolymer. The content of the coupled block copolymer in the block copolymer mixture of this invention is preferably at least 25%, more preferably at least 30%. When the content is less than 20%, a pressure-sensitive adhesive composition produced from the block copolymer mixture has a poor balance between initial adhesive strength and adhesion-holdability and also undergoes blocking during storage.

The coupled alkenyl aromatic compound-conjugated diene block copolymer of this invention is characterized in that the alkenyl aromatic compound-conjugated diene block copolymers produced by polymerizing an alkenyl aromatic compound and a conjugated diene are coupled with (A) a tin type compound such as a tin chloride compound or (B) a mixture of said tin type compound and at least one non-tin type coupling agent added to the polymerization system after the polymerization.

When the coupled block copolymer of this invention produced using at least one tin-containing coupling agent as mentioned above is used as hot-melt type pressure-sensitive adhesives, the initial adhesive strength, adhesion-holdability, peeling strength and die-cuttability of said adhesives are remarkably improved, and these adhesives cause only limited blocking and are very easy to store and handle.

It is true that each of the respective measures as such of the preparation of coupled alkenyl aromatic compound-conjugated diene block, i.e. polymerizing an alkenyl aromatic compound in the presence of a

hydrocarbyl lithium initiator, adding a monomer feed of a conjugated diene or a mixture thereof with an alkenyl aromatic compound, forming an elastomeric block comprising predominantly polymerized diene and adding a polyfunctional coupling agent to couple the linear block copolymer such as a tin-compound, are in principle known from U.S. patent No. 3,778,490 and French patent application No. 2,293,446. However, in these publications not any teaching to a person skilled in the art can be found, how to reach the specific coupled block copolymers, which have appeared to provide the attractive properties, when applied in hot melt type pressure sensitive adhesives.

In the production of the coupled block copolymer of this invention, firstly 10 to 100% by weight of the total amount of an alkenyl aromatic compound is polymerized. After the polymerization of said alkenyl aromatic compound has been substantially completed, a conjugated diene or a mixture consisting of 50% by weight or more of a conjugated diene and 50% by weight or less of an alkenyl aromatic compound is added and polymerized.

When a mixture of a conjugated diene and an alkenyl aromatic compound is used, if the proportion of the conjugated diene in the mixture is less than 50% by weight, the resulting block copolymer is poor in adhesion when used as pressure-sensitive adhesives.

The conjugated diene or the mixture thereof can be added in one portion or in at least two portion, preferably in 2 to 10 portions and polymerized continuously or in plural stages. The block copolymer thus produced has, as the B portion of the previously shown general formula 0 to 10 tapered blocks in which the content of bound alkenyl aromatic compound increases gradually. The block copolymer preferably has 1 to 10, more preferably 2 to 8 tapered blocks.

After the polymerization of the conjugated diene or the mixture thereof has been completed, 90 to 0% by weight of the total amount of the alkenyl aromatic compound is polymerized, if necessary (polymer portion A'). After this polymerization has been completed, a tin type coupling agent or a combination of a tin type coupling agent and a non-tin type coupling agent is added to convert the polymers to a coupled block copolymer.

The weight ratio [(2)/(1)] of the tin type coupling agent (1) and the non-tin type coupling agent (2) is preferably 0 - 5, more preferably 0 - 3.

When the weight ratio [(2)/(1)] is larger than 5, the blocking phenomenon cannot be prevented from being caused, and storage and handling become difficult.

The amount of the coupling agent added is 0.2 to 1.8 equivalents, preferably 0.4 to 1.5 equivalents, per equivalent of lithium of the lithium-terminated block copolymer.

When the amount is less than 0.2 equivalent or more than 1.8 equivalents, the coupled block copolymer obtained contains too large an amount of uncoupled polymers and when it is used as a pressure-sensitive adhesive, adhesion-holdability becomes inferior.

In the production of the block copolymer of this invention, it is preferred that the polymerization of an alkenyl aromatic compound or a conjugated diene be conducted in the presence of an ether or a tertiary amine.

The amount of the ether or the tertiary amine added is preferably 0.0005 to 1 part by weight, more preferably 0.005 to 0.5 part by weight per 100 parts by weight of the monomers. When the amount is outside this range, a pressure-sensitive adhesive produced from the resulting block copolymer is poor in balance between adhesive strength and adhesion-holdability.

The ether or the tertiary amine includes, for example, tetrahydrofuran, diethyl ether, anisole, dimethoxybenzene, ethylene glycol dimethyl ether, triethylamine, N-dimethylaniline, and pyridine.

The alkenyl aromatic compound used in this invention includes styrene, $\alpha$-methylstyrene, p-methylstyrene, m-methylstyrene, o-methylstyrene, p-tert-butylstyrene, dimethylstyrene, and vinylnaphthalene. Of these, styrene is preferred. The conjugated diene includes butadiene, isoprene, and piperylene. Of these, isoprene is preferred.

The block copolymer used in this invention can be produced according to an isothermal polymerization process or an adiabatic polymerization process. The polymerization temperature is preferably 10 to 140 °C, more preferably 30 to 120 °C, and most preferably 30 to 110 °C.

In the production of the coupled block copolymer of this invention, a hydrocarbon solvent may be used. Specific examples of this solvent include cyclopentane, cyclohexane, benzene, ethylbenzene, xylene and mixtures thereof with pentane, hexane, heptane, or butane.

The organolithium compound used as a polymerization initiator includes, for example, n-butyllithium, sec-butyllithium, tert-butyllithium, n-hexyllithium, isohexyllithium, phenyllithium, and naphthyllithium. It is used in an amount of 0.01 to 1.0 part by weight per 100 parts by weight of the monomers.

As the tin type coupling agent used in the production of the block copolymer of this invention, a tin halide compound is preferred. The tin halide compound includes tin halides such as stannous chloride,

stannic chloride, stannous bromide, stannic bromide, stannous iodide, stannic iodide, stannous fluoride, stannic fluoride and alkyltin halides such as methyltin trichloride, butyltin trichloride and dibutyltin dichloride. Of these, stannic chloride, stannic bromide and butyltin trichloride are particularly preferred.

As the non-tin type coupling agent, there may be used divinyl aromatic compounds such as divinylbenzene and divinylnaphthalene; dihalogenated alkanes such as dichloroethane, dibromoethane, methylene chloride, dibromomethane, dichloropropane, and dibromopropane; trihalogenated alkanes such as chloroform, trichloroethane, trichloropropane, and tribromopropane; benzoic acid esters; halogenated silicon compounds such as silicon tetrachloride, dimethyldichlorosilicon, and tetrabromosilicon; carbon monoxide; 2-chloropropene; and 1-chloro-1,3-butadiene.

The coupled block copolymer of this invention is suitable for use in hot-melt type pressure-sensitive adhesives.

When the coupled block copolymer of this invention is used in hot-melt type pressure-sensitive adhesives, in order to further improve the initial tack particularly at low temperatures, the content of the alkenyl aromatic compound in the coupled block copolymer is preferably 3 to 50% by weight, more preferably 5 to 40% by weight in view of the balance among adhesion-holdability, die-cuttability and initial adhesive strength of said adhesives.

The coupled block copolymer of this invention, when used in pressure-sensitive adhesive compositions, may contain block copolymers other than those coupled with a tin compound, namely uncoupled block copolymers and/or block copolymers coupled with a not-tin type coupling agent. The content of these other block copolymers is preferably from 0 to 80% by weight, more preferably 50% by weight or less based on the total block copolymers. The weight ratio of the coupled alkenyl aromatic compound-conjugated diene block copolymer and the other block copolymer is preferably from 30:70 to 100:0.

Said other block copolymers include those represented by the following general formulas:

General formula (3) $(A-B)_m-A$

General formula (4) $(A-B)_m$

General formula (5) $(B-A)_m-B$

General formula (6) $[(A-B)_m]_{n''}Z$

General formula (7) $[(A-B-A)_m]_{n''}Z$

In the above formulas, A is a block of a polymer of an alkenyl aromatic compound or a block of a copolymer of an alkenyl aromatic compound (main component) and another monomer such as a conjugated diene compound or the like; B is a block of a polymer of a conjugated diene compound or a block of a copolymer of a conjugated diene compound (main component) and another monomer such as an alkenyl aromatic compound or the like; Z is the residue of a non-tin type coupling agent; m is an integer of 1 or more; and n" is an integer of 1 to 6 corresponding to the functionality of Z. The block copolymers represented by the general formulas (3), (4) and (6) are particularly preferred.

The block copolymer represented by the general formula (3) can be produced as follows.

To a hydrocarbon solvent is added, if necessary, an ether or a tertiary amine. In this system, an alkenyl aromatic compound is firstly polymerized using an organolithium compound as a polymerization initiator. After the polymerization has been substantially completed, a conjugated diene compound is added and polymerized. Then, an alkenyl aromatic compound same as or different from the above one is added and polymerized.

The block copolymers represented by the general formulas (4) and (5) can be produced in accordance with the process mentioned above or in accordance with a process for producing the block copolymer represented by the general formula (6) which is described below. In the production of the block copolymer of the general formula (6), an alkenyl aromatic compound is firstly polymerized and then a conjugated diene compound is added and polymerized in the same manner as in the production of the block copolymer of the general formula (3); thereafter, a coupling agent having at least two but at most 6 functional groups is added to couple the polymers formed.

The tin-coupled block copolymer or a block copolymer mixture consisting of said block copolymer and other block copolymers, when used in pressure-sensitive adhesives or in adhesives, is mixed with a tackifier and further, if necessary, with an organic acid. The organic acid includes aliphtic monocarboxylic acids such as stearic acid, oleic acid, and palmitic acid; aliphtic dicarboxylic acids such as maleic acid, and fumaric acid; aromatic monocarboxylic acids such as benzoic acid; aromatic dicarboxylic acids such as phthalic

acid, isophthalic acid, and terephthalic acid; resin acids such as abietic acid, neoabietic acid, dihydroabietic acid, tetrahydroabietic acid, α-pimaric acid, iso-α-pimaric acid, dihydropimaric acid, and levopimaric acid. These organic acids can be used alone or in admixture of two or more. The amount of the organic acid used is 20 parts by weight or less, preferably 0.01 to 20 parts by weight, more preferably 0.1 to 10 parts by weight, and most preferably 0.2 to 10 parts by weight, per 100 parts by weight of the above-mentioned block copolymer mixture. When the amount of the organic acid is outside the above range, the resulting pressure-sensitive adhesive has a poor balance between initial adhesive strength and adhesion-holdability. The initial adhesive strength can be improved by addition of one of the above-mentioned organic acids.

The tackifier includes a rosin type resin, a polyterpene type resin, a synthetic polyterpene type resin, an alicyclic hydrocarbon resin, a coumarone type resin, a phenol type resin, a terpene-phenol type resin, an aromatic hydrocarbon resin, and an aliphatic hydrocarbon resin,. Of these, the rosin type resin, the polyterpene type resin and the alicyclic hydrocarbon resin are particularly preferred. These tackifiers can be used alone or in admixture of two or more. The amount of the tackifier used is 20 to 200 parts by weight, preferably 50 to 150 parts by weight, and more preferably 70 to 130 parts by weight, per 100 parts by weight of the block copolymer mixture. When the amount of the tackifier is outside the above range, the resulting pressure-sensitive adhesive is insufficient in initial adhesive strength and adhesion-holdability.

The pressure-sensitive adhesive composition can further contain a softener. The softener includes, for examples, naphthenic, paraffinic and aromatic process oils and these can be used alone or in admixture of two or more. The amount of the softener used is 0 to 100 parts by weight, preferably 20 to 70 parts by weight, per 100 parts by weight of the block copolymer mixture. When the amount of the softener exceeds 100 parts by weight, the softener bleeds onto the surface of the pressure-sensitive adhesive composition with the lapse of time, which is undesirable.

In addition to the components mentioned above, the pressure-sensitive adhesive composition of this invention may further contain, if necessary, a stabilizer (e.g., an anti-oxidant, an ultraviolet absorber), an inorganic filler (e.g., calcium carbonate, talc, clay, titanium oxide, silica, magnesium carbonate, carbon black), a coloring agent. The above-mentioned components of the pressure-sensitive adhesive composition of this invention are mixed with heating in, if necessary, a nitrogen gas atmosphere by a conventional tank type mixer, closed type kneader or the like.

The pressure-sensitive adhesive composition according to this invention exhibits the largest economical effect when it is heat-melted, mixed uniformly and coated as it is to form an adhesive layer. However, this composition can also be coated after being diluted with an ordinary solvent or after being emulsified.

The pressure-sensitive adhesive composition of this invention obtained as above is coated on a substrate to form an adhesive layer. Therefore, this composition is effectively used in such applications as pressure-sensitive adhesive tapes, labels, backing pastes for fixing light weight, shaped plastic articles and backing pastes for fixing carpets. Further, the composition is effective as an adhesive layer material for pressure-sensitive adhesive tapes and labels used for frozen food or used in cold districts.

Besides, the coupled block copolymer of this invention has other extensive applications. It can preferably be used in such applications as, for example, injection moldings (e.g., footwears, containers), flow moldings (e.g., toys, household articles) and compression moldings (e.g., packings, sheets, plates). Further, the coupled block copolymer of this invention can be used for altering the physical properties of other rubbers such as SBR, NBR and the like or plastics such as a polystyrene and the like, by incorporating it into said other rubbers or plastics. For example, the coupled block copolymer of this invention is utilized as an improver of, for example, impact resistance for crepe type sponges (when mixed with rubbers) or for general-purpose polystyrenes (when mixed with plastics). Furthermore, the coupled block copolymer of this invention can be mixed with asphalts for an improvement of their low temperature resitance.

This invention will be explained in detail below referring to Examples and the accompanying drawing, which is a sectional view of a flap test apparatus used in Examples 12 to 18, wherein 1 refers to a tape sample, 2 to corrugated boards, 3 to movable plates constituted in such a way that their inner ends rise when a weight is applied onto their outer ends, and 4 to the main body of the flap test apparatus. It should not be interpreted that this invention be restricted to the Examples.

Various measurements were conducted in accordance with the following test methods.

1. Initial adhesive strength was measured in accordance with the inclination type ball tack measurement method (inclination angle: 30°, measurement temperature: 25°C).

2. Peel strength was measured in accordance with JIS Z 1522 (constant speed 180° - peeling test, temperature: 25°C).

3. Adhesion-holdability was measured in accordance with JIS Z 1524, provided that the adhered area was 15 x 25 mm, and the time required until a weight of 500 g fell down was measured. The measurement temperature was 25°C.

4. Die-cuttability was evaluated in accordance with the following method. A pressure-sensitive adhesive was hot-melt-coated on a paper of fine quality in a desired thickness; this paper was adhered to a releasing paper; the resulting assembly was cut to a size of 20 cm x 4 cm; a punching edge of a size of 1.5 cm x 1.5 cm was applied to the cut assembly so that only the fine quality paper was cut to form 20 pieces which were arranged in two parallel rows, each having 10 pieces; then the uncut part of the fine quality paper was stripped from the releasing paper by hand. When the number of adhesive labels stripped was 0 or 1, the die-cuttability of the pressure-sensitive adhesive tested was rated as o; when the number was 2 to 3, the die-cuttability was rated as Δ; and when the number was 4 or more, the die-cuttability was rated as ×.

5. Total styrene content was measured by the infrared abosorption spectrum method.

6. Blocking property of the coupled block copolymers were measured by placing 50 g of the coupled block copolymer of crumb shape of about 4 mm in diameter and about 5 mm in length in a polyethylene bag, keeping the bag in a constant temperature bath at 50 °C for 24 hr with applying a weight of 50 g/cm$^2$, and then examining the extent of blocking of the crumb-shaped block copolymer used. The rating of blocking was made as follows:

o : No adhesion between crumbs.
o : Adhesion between crumbs exists but they can be easily separated when touched by hand.
Δ : Adhered crumbs cannot be separated by hand.
X : Crumbs were adhered to form a sheet.

Example 1

In a cleaned and dried autoclave equipped with a stirrer and a jacket were placed 4,500 g of cyclohexane and 1 g of tetrahydrofuran in a nitrogen atmosphere. The temperature inside the autoclave was elevated to 70 °C.

Then, to the autoclave contents was added a hexane solution of 0.4 g of n-butyllithium, followed by addition of 50 g of styrene. The resulting mixture was subjected to polymerization for 60 min. The polymerization conversion of styrene was 100%. To the polymerization mixture was added 280 g of isoprene and the resulting mixture was subjected to polymerization for 60 min. The polymerization conversion of isoprene was 100%.

Lastly, to this sytem were added 0.20 g of sufficiently dried tin tetrachloride and a cyclohexane solution of 0.18 g of dichloromethylsilane and the resulting mixture was subjected to coupling reaction for 20 min.

Throughout the above polymerization reactions, the polymerization temperature was controlled at 70 °C. After completion of the last polymerization, to the polymerization mixture was added 2,6-di-tert-butyl-p-cresol and then cyclohexane was removed by heating to obtain a block copolymer.

The structure and physical properties of the coupled block copolymer obtained are shown in Table 2.

Using this coupled block copolymer, the compound shown in Table 1 was prepared. The compound was dissolved in a mixed solvent consisting of equal volumes of methylene chloride and toluene; the resulting solution was coated in a thickness of 30 to 35 µm on a polyester film of 50 µm in thickness; and the coated polyester film was dried for 20 min at 100 °C to obtain a pressure-sensitive adhesive tape. The tape was measured for adhesion characteristics. The measurement results are shown in Table 2.

Table 1

| Compound | |
|---|---|
| Component | Amount (parts by weight) |
| Block copolymer | 100 |
| Synthetic polyterpene resin (Quintone U-185, brand name of Nippon Zeon Co., Ltd.) | 100 |
| Process Oil of naphthene type (Diana Process Oil NM-280, brand name of Idemitsu Kosan) | 20 |
| Anti-oxidant of phenol type (Nocrack NS-6, brand name of Ohuchi Shinko Kagaku) | 3 |
| Stearic acid | 2 |

Examples 2 to 9, Comparative Examples 1 to 5

Using styrene, isoprene, and coupling agents in the amounts shown in Table 2, polymerization was conducted in the same manner as in Example 1.

The structure and physical properties of each coupled block copolymer obtained are shown in Table 2. In Example 9, the block B was obtained by adding a mixture of styrene and isoprene in three portions and, after each addition, substantially 100% polymerizing each of the added portions, and had three tapered bloks in which the content of bound styrene increased gradually.

Each block copolymer obtained was subjected to measurement of adhesion characteristics in the same manner as in Example 1. The results are shown in Table 2.

The block copolymers of Examples 1 to 8, as compared with those of Comparative Examples 1 to 5, are superior in balance of initial adhesive strength, peeling strength and die-cuttability and are less liable to cause blocking phenomenon.

Example 10

Polymerization was conducted in the same manner as in Example 1, except that butadiene was substituted for the isoprene.

The block copolymer obtained was subjected to evaluation of adhesion characteristics in the form of the same compound as in Example 1. The results are shown in Table 2.

Table 2

| Example No. or Comparative Example No. | Amount of styrene added (g) | Amount of isoprene added (g) | Tin type coupling agent | | Non-tin type coupling agent | | Amount of bound styrene (% by weight) |
|---|---|---|---|---|---|---|---|
| | | | Kind | Amount added (g) | Kind | Amount added (g) | |
| Example 1 | 50 | 280 | Tin tetra-chloride | 0.20 | Dichloromethylsilane | 0.18 | 15 |
| 2 | 50 | 280 | " | 0.41 | - | - | 15 |
| 3 | 50 | 280 | " | 0.31 | Dichloromethylsilane | 0.090 | 15 |
| 4 | 50 | 280 | " | 0.10 | " | 0.27 | 15 |
| 5 | 30 | 270 | " | 0.20 | " | 0.18 | 10 |
| 6 | 100 | 230 | " | 0.20 | " | 0.18 | 30 |
| 7 | 50 | 280 | " | 0.20 | Dibromoethane | 0.29 | 15 |
| 8 | 50 | 280 | " | 0.20 | Dichlorobutene | 0.20 | 15 |
| 9 | 50 | 280 | " | 0.20 | Dichloropropane | 0.18 | 15 |
| 10 | 50 | (Buta-diene) 280 | " | 0.20 | Dichloromethylsilane | 0.18 | 15 |
| Comparative Example 1 | 50 | 280 | - | - | - | - | 15 |
| 2 | 50 | 280 | - | - | Dichloromethylsilane | 0.18 | 15 |
| 3 | 50 | 280 | - | - | " | 0.36 | 15 |
| 4 | 150 | 840 | - | - | - | - | 15 |
| 5 | 75 | 420 | - | - | Dichloromethylsilane | 0.36 | 15 |

- Cont'd -

Table 2 (Cont'd)

| Molecular weight of styrene polymer before coupling (x $10^4$) | Molecular weight of isoprene polymer before coupling (x $10^4$) | Average molecular weight of block co-polymer after coupling (x $10^4$) | Block-ing property during storage | Adhesion characteristics | | | |
|---|---|---|---|---|---|---|---|
| | | | | Initial adhesive strength (Ball No.) | Peeling strength (kg·f/ 2.5 cm) | Die-cuttabi-lity | Adhesion-holdability (min) |
| 0.8 | 4.5 | 15.9 | o | 32 | 3.2 | o | 60 |
| 0.8 | 4.5 | 21.2 | ◎ | 32 | 3.0 | o | 55 |
| 0.8 | 4.5 | 18.6 | ◎ | 32 | 3.1 | o | 57 |
| 0.8 | 4.5 | 13.3 | o | 32 | 3.2 | o | 62 |
| 0.5 | 4.3 | 14.4 | o | 32 | 3.0 | o | 62 |
| 1.6 | 3.7 | 15.9 | o | 30 | 3.3 | o | 95 |
| 0.8 | 4.5 | 15.9 | o | 32 | 3.2 | o | 65 |
| 0.8 | 4.5 | 15.9 | o | 32 | 3.2 | o | 60 |
| 0.8 | 4.5 | 15.9 | o | 31 | 3.2 | o | 60 |
| 0.8 | 4.5 | 15.9 | ◎ | 30 | 3.1 | o | 58 |
| 0.8 | 4.5 | 5.3 | x | 27 | 2.9 | o | 25 |
| 0.8 | 4.5 | 7.9 | x | 32 | 3.1 | o | 66 |
| 0.8 | 4.5 | 10.6 | Δ | 32 | 3.2 | o | 69 |
| 2.4 | 13.5 | 15.9 | x | 32 | 2.9 | Δ | 29 |
| 1.2 | 6.8 | 15.9 | Δ | 31 | 3.3 | o | 70 |

Example 11

[Production of block copolymers of general formula (1) type]

(Production of A1)

In a cleaned and dried autoclave equipped with a stirrer and a jacket were placed 0.12 g of tetrahydrofuran and 5,000 g of a mixed solvent consisting of 9 parts of cyclohexane and 1 part of n-pentane. The temperature inside the autoclave was elevated to 60 °C. To the autoclave contents was added a hexane solution of 0.5 g of n-butyllithium, followed by addition of 120 g of styrene. The resulting mixture was subjected to polymerization for 60 min. The polymerization conversion of styrene was 100%. To the polymerization mixture was added 700 g of isoprene, and the resulting mixture was subjected to polymerization for 60 min. The polymerization conversion of isoprene was 100%. Lastly, to the polymerization mixture was added a cyclohexane solution of 0.51 g of stannic chloride, and the resulting mixture was subjected to coupling reaction for 60 min. The degree of coupling was 100%. Throughout the above polymerization and coupling reactions, the system temperature was kept at 60 °C. After completion of the coupling, to the polymer solution was added 2,6-di-tert-butyl-p-cresol and then the mixed solvent of cyclohexane and n-pentane was removed by heating to obtain a block copolymer A1.

(Production of A2 and A3)

Block copolymers A2 and A3 were produced by repeating the same procedure as used in the production of A1, except that different monomer amounts, different coupling agent amounts and different polymerization periods were used. The details of the block copolymers A2 and A3 are shown in Table 3.

[Production of block copolymers of general formula (2) type]

(Production of A4)

In a cleaned and dried autoclave equipped with a stirrer and a jacket were placed 0.12 g of tetrahydrofuran and 5,000 g of a mixed solvent consisting of 9 parts of cyclohexane and 1 part of n-pentane in a nitrogen atmosphere. The temperature inside the autoclave was elevated to 60 °C. To the autoclave contents was added a hexane solution of 0.5 g of n-butyllithium, followed by addition of 120 g of styrene. The resulting mixture was subjected to polymerization for 60 min. The polymerization conversion of styrene was 100%. To the polymerization mixture was added 700 g of isoprene and the resulting mixture was subjected to polymerization for 60 min. The polymerization conversion of isoprene was 100%. To the polymerization mixture was added 120 g of styrene, and the resulting mixture was subjected to polymerization for 60 min. The polymerization conversion of styrene was 100%. Lastly, to the polymerization mixture was added a cyclohexane solution of 0.51 g of stannic chloride, and the resulting mixture was subjected to coupling reaction for 60 min. The degree of coupling was 100%.

Throughout the above polymerization and coupling reactions, the system temperature was kept at 60 °C. After completion of the coupling reaction, to the polymer solution was added 2,6-di-tert-butyl-p-cresol, and then the mixed solvent of cyclohexane and n-pentane was removed by heating to obtain a block copolymer A4.

(Production of A5)

A block copolymer A5 was produced by repeating the same procedure as in the production of the block copolymer A4, except that different monomer amounts, a different coupling agent amount and different polymerization periods were used.

The details of the block copolymers obtained are shown in Table 3.

Table 3

| | Type | Coupling agent | Coupling efficiency | Weight average molecular weight of S block before coupling ($\times 10^4$) | Weight average molecular weight of I block before coupling ($\times 10^4$) | Weight average molecular weight after coupling ($\times 10^4$) |
|---|---|---|---|---|---|---|
| A1 | $(S-I)_4-Sn$ | Stannic chloride | 100% | 1.5 | 9.0 | 42 |
| A2 | " | " | " | 1.0 | 9.0 | 40 |
| A3 | " | " | 50% | 1.0 | 9.0 | 30 |
| A4 | $(S-I-S)_4-Sn$ | " | 100% | 1.5 | 9.0 | 48 |
| A5 | " | " | " | 0.5 | 7.8 | 35 |

[Production of block copolymer of general formula (4) type]

(Production of B1)

In a cleaned and dried autoclave equipped with a stirrer and a jacket were placed 0.12 g of tetrahydrofuran and 5,000 g of a mixed solvent consisting of 9 parts of cyclohexane and 1 part of n-pentane in a nitrogen atmosphere. The temperature inside the autoclave was elevated to 60°C. To the autoclave contents was added a hexane solution of 0.5 g of n-butyllithium, followed by addition of 120 g of styrene. The resulting mixture was subjected to polymerization for 60 min. The polymerization conversion of styrene was 100%. To the polymerization mixture was added 700 g of isoprene and the resulting mixture was subjected to polymerization for 60 min. The polymerization conversion of isoprene was 100%. Throughout the above polymerization reactions, the system temperature was kept at 60° to 70°C. After completion of the last polymerization, to the polymer solution was added 2,6-di-tert-butyl-p-cresol, and then the mixed solvent of cyclohexane and n-pentane was removed by heating to obtain a block copolymer B1.

[Production of block copolymers of general formula (3) type]

(Production of B2)

In a cleaned and dried autoclave equipped with a stirrer and a jacket were placed 0.12 g of tetrahydrofuran and 5,000 g of a mixed solvent consisting of 9 parts of cyclohexane and 1 part of n-pentane in a nitrogen atmosphere. The temperature inside the autoclave was elevated to 60°C. To the autoclave contents was added a hexane solution of 0.5 g of n-butyllithium, followed by addition of 120 g of styrene. The resulting mixture was subjected to polymerization for 60 min. The polymerization conversion of styrene was 100%. To the polymerization mixture was added 700 g of isoprene and the resulting mixture was subjected to polymerization for 60 min. The polymerization conversion of isoprene was 100%. To the polymerization mixture was added 120 g of styrene and the resulting mixture was subjected to polymerization for 60 min. The polymerization conversion of styrene was 100%.

Throughout the above polymerization reactions, the system temperature was kept at 60° to 70°C. Lastly, to the polymer solution was added 2 g of 2,6-di-tert-butyl-p-cresol, and then the mixed solvent of cyclohexane and n-pentane was removed by heating to obtain a block copolymer B2.

(Production of B3)

A block copolymer B3 was produced by repeating the same procedure as in the production of B2, except that different monomer amounts and different polymerization periods were used.

The details of the block copolymers porudced as above are shown in Table 4.

Table 4

| Type | Weight average molecular weight (x $10^4$) | Content of S component |
|---|---|---|
| B1 S - I | 10.5 | 15 |
| B2 S - I - S | 12.0 | 25 |
| B3 S - I - S | 30.0 | 10 |

Examples 11-1 to 11-8, Comparative Examples 11-1 to 11-4

The compound with the compounding recipe shown in Table 5 was placed in a mixing tank heated to 100°C. The same was stirred for 60 min to obtain a pressure-sensitive adhesive composition having a uniformity and a smooth fluidity.

Each of the pressure-sensitive adhesive compositions obtained was taken out in a molten state and coated on a substrate made of a polyester film by means of an applicator so that the coating layer had a thickness of 30 μ, whereby various pressure-sensitive adhesive tape samples were prepared. On each of these pressure-sensitive adhesive tape samples, initial adhesive strength, peeling strength, adhesion-holdability and die-cuttability were measured. The results are shown in Table 5.

Table 5

| | | | Example | | | | | |
|---|---|---|---|---|---|---|---|---|
| | | | 11-1 | 11-2 | 11-3 | 11-4 | 11-5 | 11-6 |
| Recipe of composition (Parts by weight) | Block copolymer | A1 | 100 | | | 50 | | |
| | | A2 | | 100 | | | 50 | 50 |
| | | A3 | | | 100 | | | |
| | | A4 | | | | | | |
| | | A5 | | | | | | |
| | Block copolymer | B1 | | | | 50 | | |
| | | B2 | | | | | 50 | |
| | | B3 | | | | | | 50 |
| | Stearic acid | | 2 | 2 | | 2 | | 2 |
| | Rosin (Gum Rosin ®) | | | | 3 | | 3 | |
| | Rosin type resin | | 100 | 100 | 100 | 100 | 100 | 100 |
| | Softener | | 20 | 20 | 20 | 20 | 20 | 20 |
| | Anti-oxidant | | 2 | 2 | 2 | 2 | 2 | 2 |
| Physical properties | Initial adhesive strength (Ball No.) | | 32 | 32 | 32 | 32 | 31 | 32 |
| | Peeling strength (kg·f/2.5 cm) | | 3.2 | 3.1 | 3.0 | 3.0 | 3.0 | 3.1 |
| | Adhesion-holdability (min) | | 80 | 70 | 65 | 65 | 60 | 60 |
| | Die-cuttability | | o | o | o | o | o | o |

- Cont'd -

Table 5 (Cont'd)

| | | Comparative Example | | | |
|---|---|---|---|---|---|
| 11-7 | 11-8 | 11-1 | 11-2 | 11-3 | 11-4 |
| | | 10 | | | |
| 100 | | | | | |
| | 100 | | | | |
| | | 90 | | | |
| | | | 100 | | 100 |
| | | | | 100 | |
| 3 | | 3 | | 3 | |
| | 3 | | 3 | | |
| 100 | 100 | 100 | 100 | 100 | 100 |
| 20 | 20 | 20 | 20 | 20 | 20 |
| 2 | 2 | 2 | 2 | 2 | 2 |
| 32 | 32 | 32 | 20 | 24 | 18 |
| 3.2 | 3.0 | 2.5 | 2.7 | 2.8 | 2.9 |
| 95 | 65 | 25 | 45 | 50 | 50 |
| o | o | △ | × | △ | △ |

Examples 12 to 18, Comparative Examples 12 to 16

Using styrene, isoprene, tetrahydrofuran, cyclohexane, and coupling agents in the amounts shown in Table 6, polymerization was conducted in the same manner as in Example 1 to obtain various block copolymers. The structures and physical properties of these block copolymers are shown in Table 6. Using the block copolymers, there were prepared the compositions shown in Table 7. Each of them was placed in a mixing tank heated to 160° C and stirred for 60 min, whereby various pressure-sensitive adhesive compositions having a uniformity and a smooth fluidity were obtained. Each of these pressure-sensitive adhesive compositions was taken out in a molten state and coated on a polyester film by means of an applicator in a thickness of 30 μ to prepare a pressure-sensitive adhesive tape. These pressure-sensitive adhesive tapes were subjected to measurement of a low temperature tack, a peeling strength, an adhesion-holdability at high temperatures and a sealability for corrugated board. The results are shown in Table 7. The above measurements were made in accordance with the following test methods:

[Test methods for adhesion characteristics]

Low temperature tack

In accordance with PSTC #6 Rolling Ball Tack, the rolling distance of ball measured. The measurement temperature was 0° C and the running distance of ball was 7.5 cm.

Adhesive strength

Measured in accordance with JIS Z 0237. The load was 1.4 kg and the environmental temperature was 40° C.

Sealability for corrugated board

Two corrugated boards each having a size of 40 mm x 40 mm were cut off from a commercially available corrugated box. The two boards were contacted at one end of each. On this border, the two boards were pressure-bonded with a tape sample of 10 mm in width and 40 mm in length by applying a load of a 2 kg roll 10 times under the environmental conditions of 25° C and 65% RH. The resulting corrugated boards adhered were placed on a flap test apparatus shown in the accompanying drawing, and a load (200 g x 2) was applied and the time required until the load fell down was measured. Each measurement value is an average of the values of five samples.

Table 6 Polymerization Recipes and Molecular Properties of Polymers

| | | Example | | | | |
|---|---|---|---|---|---|---|
| | | 12 | 13 | 14 | 15 | 16 |
| Polymerization recipe | Styrene (g) | 45 | 45 | 45 | 45 | 45 |
| | Isoprene (g) | 290 | 290 | 290 | 300 | 300 |
| | n-Butyllithium (g) | 0.15 | 0.15 | 0.15 | 0.19 | 0.19 |
| | Cyclohexane (g) | 4500 | 4500 | 4500 | 4500 | 4500 |
| | Tetrahydrofuran (g) | 0.45 | 0.45 | 0.45 | 1 | 1 |
| | Coupling agents | | | | | |
| | Dibutyltin dichloride (mg) | 135 | 206 | 278 | 271 | 361 |
| | Dichloromethylsilane (mg) | 83.5 | 56.6 | 29.6 | 68.3 | 34.2 |
| Molecular properties of polymer | Amount of bound styrene (wt%) | 13.3 | 13.3 | 13.3 | 13.0 | 13.0 |
| | Molecular weight of polymer before coupling | | | | | |
| | Styrene polymer portion ($x10^4$) | 1.9 | 1.9 | 1.9 | 1.5 | 1.5 |
| | Isoprene polymer portion ($x10^4$) | 12.4 | 12.4 | 12.4 | 10.1 | 10.1 |
| | Molecular weight of polymer after coupling ($x10^4$) | 28.6 | 28.6 | 28.6 | 23.3 | 23.3 |
| | Blocking property during polymer storage | ◎ | o | o | o | o |

- Cont'd -

Table 6 (Cont'd)

| | | Comparative Example | | | |
|---|---|---|---|---|---|
| 17 | 18 | 12 | 13 | 14 | 15 |
| 50 | 60 | 45 | 45 | 50 | 60 |
| 250 | 240 | 300 | 300 | 250 | 240 |
| 0.16 | 0.15 | 0.19 | 0.19 | 0.16 | 0.15 |
| 4500 | 4500 | 4500 | 4500 | 4500 | 4500 |
| 0.25 | 0.25 | 1 | 1 | 0.25 | 0.25 |
| 228 | 214 | | | | |
| 57.5 | 53.9 | 68.3 | 34.2 | 57.5 | 53.9 |
| 16.7 | 20.0 | 13.0 | 13.0 | 16.7 | 20.0 |
| 2.0 | 2.6 | 1.5 | 1.5 | 2.0 | 2.6 |
| 10.0 | 10.2 | 10.1 | 10.1 | 10.0 | 10.2 |
| 24.0 | 25.6 | 16.3 | 14.0 | 16.8 | 17.9 |
| o | ◎ | x | x | x | Δ |

Table 7 Adhesion Characteristics

| | Example | | | | | | | Comparative Example | | | |
|---|---|---|---|---|---|---|---|---|---|---|---|
| | 12 | 13 | 14 | 15 | 16 | 17 | 18 | 12 | 13 | 14 | 15 |
| Compounding recipe of pressure-sensitive adhesive | A | A | A | B | B | B | B | B | B | B | B |
| Low temperature tack (cm) | 11 | 10 | 8 | 8 | 8 | 14 | 17 | 8 | 8 | 14 | 18 |
| Peeling strength (kg·f/2.5 cm) | 1.9 | 2.0 | 1.9 | 1.8 | 1.7 | 2.0 | 1.5 | 1.8 | 1.7 | 2.0 | 1.5 |
| Adhesion-holdability (min) | >60 | 55 | 43 | 50 | 38 | 40 | 55 | 50 | 37 | 40 | 54 |
| Sealability for corrugated board (min) | 131 | 185 | 220 | 91 | 112 | 115 | 186 | 90 | 110 | 112 | 184 |

Table 8

| Compounding components | Amount (part by weight) | |
|---|---|---|
| | A | B |
| Block copolymer | 100 | 100 |
| Escorez 1310 | 100 | - |
| Ester gum H | - | 100 |
| Process oil of naphthenes type (Idemitsu NM-280) | 40 | 20 |
| Anti-oxidant | | |
| Irganox 1010 | 1 | - |
| BHT | - | 2 |

## Claims

1. A pressure-sensitive adhesive composition comprising:
(a) 100 parts by weight of a block copolymer containing at least 20% by weight of a coupled alkenyl aromatic compound-conjugated diene block copolymer having a total bound alkenyl aromatic compound content of from 3 to 70% by weight, having a weight average molar weight of from 10,000 to 1,000,000, and represented by the general formula:

$[(A\text{-}B)_m]_n$ X and/or
$[(A\text{-}B\text{-}A')_m]_n$ X

wherein A and A' are the same or different and each represents a block of an alkenyl aromatic compound polymer, having a weight average molecular weight in the range from 3,000 to 200,000;
B represents a block of a conjugated diene polymer or a block of a conjugated diene-alkenyl aromatic compound copolymer, having a proportion of conjugated diene of at least 50% by weight, said block having a weight average molecular weight in the range of from 7,000 to 700,000;
X represents the residue of a tin-containing coupling agent or a mixture of the residue of a tin-containing coupling agent and the residue of a non-tin-containing coupling agent, the coupled block copolymer containing at least 20% by weight of a tin compound coupled alkenyl aromatic compound-conjugated diene block copolymer;
m is an integer of 1 or more; and n is an integer from 2 to 6 corresponding to the functionality of X;
(b) from 20 to 200 parts by weight of a tackifier;
(c) from 0 to 20 parts by weight of an organic acid; and
(d) from 0 to 100 parts by weight of a softener

2. A pressure-sensitive adhesive composition according to claim 1, wherein the block copolymer consists of from 20 to 100% by weight of a coupled alkenyl aromatic compound-conjugated diene block copolymer represented by the general formula:

$[(A\text{-}B)_m]_n$ X and/or

$[(A\text{-}B\text{-}A')_m]_n$ X

and from 80 to 0% by weight of another block copolymer.

**3.** A pressure-sensitive adhesive composition according to claim 2, wherein the weight ratio of the coupled alkenyl aromatic compound-conjugated diene block copolymer and the other block copolymer is from 30:70 to 100:0.

**4.** A pressure-sensitive adhesive composition according to claims 1-3, wherein said other block copolymer is at least one block copolymer of formula:

$(A\text{-}B)\text{-}_mA$, $(A\text{-}B)\text{-}_m'$,
$(B\text{-}A)\text{-}_mB$, $[(A\text{-}B)_m]_n''$ Z and
$[(A\text{-}B\text{-}A)\text{-}_m]_n''$ Z

wherein: A represents a block of an alkenyl aromatic compound polymer or a block of a copolymer of an alkenyl aromatic compound (main component) and a conjugated diene; B represents a block of a conjugated diene compound polymer or a block of a copolymer of a conjugated diene (main component) and an alkenyl aromatic compound;
Z represents the residue of a non-tin-containing coupling agent; m is an integer of 1 or more; and n'' is an integer from 1 to 6 corresponding to the functionality of Z.

**5.** A pressure-sensitive adhesive composition according to claim 4, wherein said other block copolymer is a block copolymer represented by the formula $(A\text{-}B)_m$.

**6.** A pressure-sensitive adhesive composition according to any one of claims 1 to 5, wherein the amount of the tackifier is from 50 to 150 parts by weight.

**7.** A pressure-sensitive adhesive composition according to any one of claims 1 to 6, wherein the amount of the organic acid is from 0.01 to 20 parts by weight.

**8.** A pressure-sensitive adhesive composition according to any one of claims 1 to 7, wherein the amount of the softener is from 20 to 70 parts by weight.

**9.** A coupled alkenyl aromatic compound-conjugated diene block copolymer for the preparation of a pressure-sensitive adhesive as claimed in any one of claims 1 to 8, having a total bound alkenyl aromatic compound content of from 3 to 70% by weight having a weight average molar weight of from 10,000 to 1,000,000 and represented by the general formula:

$[(A\text{-}B)_m]_n$ X and/or
$[(A\text{-}B\text{-}A')_m]_n$ X

wherein A and A' are the same or different and each represents a block of an alkenyl aromatic compound copolymer, having a weight average molecular weight in the range from 3,000 to 200,000;
B represents a block of a conjugated diene polymer or a block of a conjugated diene-alkenyl aromatic compound copolymer, having a proportion of conjugated diene of at least 50% by weight, said block having a weight average molecular weight in the range of from 7,000 to 700,000;
X represents the residue of a tin-containing coupling agent or a mixture of the residue of a tin-containing coupling agent and the residue of a non-tin-containing coupling agent, the coupled block copolymer containing at least 20% by weight of a tin compound coupled alkenyl aromatic compound-conjugated diene block copolymer;
and wherein X represents the residue of at least one coupling agent selected from stannous chloride, stannic chloride, stannous bromide, stannic bromide, stannous iodide, stannic iodide, stannous fluoride, stannic fluoride, methyltin trichloride, butyltin trichloride or dibutyltin dichloride;
m is an integer of 1 or more; and n is an integer from 2 to 6 corresponding to the functionality of X.

**10.** A copolymer according to claim 9, wherein the total bound alkenyl aromatic compound content is from 5 to 50% by weight.

11. A copolymer according to claim 9, which has a molecular weight of from 50,000 to 700,000.

12. A copolymer according to any one of claims 9 to 11, wherein the block A has a molecular weight of from 5,000 to 50,000 and the block B has a molecular weight of from 10,000 to 200,000.

13. A copolymer according to any one of claims 9 to 12, wherein the block B has from 2 to 10 tapered blocks in which the bound alkenyl aromatic compound content increases gradually.

14. A copolymer according to any one of claims 9 to 13, wherein X contains from 20 to 100 mole % of the residue of a tin-containing coupling agent.

**Revendications**

1. Composition d'adhésif adhérant par pression, comprenant :
(a) 100 parties en poids d'un copolymère séquencé contenant au moins 20% en poids d'un composé alcényle aromatique et d'un copolymère séquencé de diène conjugué couplés ensemble présentant une teneur totale en composé alcényle aromatique lié de 3 à 70% en poids, ayant une masse moléculaire moyenne en poids de 10.000 à 1.000.000 et répondant à la formule générale :

$[(A\text{-}B)_m]_n$ X et/ou
$[(A\text{-}B\text{-}A')_m]_n$ X

dans lesquelles A et A', qui peuvent être identiques ou différents représentent chacun une séquence d'un polymère d'un composé alcényle aromatique, ayant une masse moléculaire moyenne en poids comprise entre 3000 et 200.000 ;
B représente une séquence d'un polymère diène conjugué ou une séquence d'un copolymère diène conjugué/composé alcényle aromatique, présentant une proportion en diène conjugué d'au moins 50% en poids, ladite séquence ayant une masse moléculaire moyenne en poids de 7000 à 700.000 ;
X représente le reste d'un agent de couplage contenant de l'étain ou un mélange du reste d'un agent de couplage contenant de l'étain et du reste d'un agent de couplage ne contenant pas de l'étain, le copolymère séquencé couplé contenant au moins 20% en poids d'un copolymère séquencé alcényle aromatique/diène conjugué couplé au composé d'étain;
m est un nombre entier de 1 ou plus ; et n est un nombre entier de 2 à 6 correspondant à la fonctionnalité de X ;
(b) de 20 à 200 parties en poids d'un agent d'adhésivité ;
(c) de 0 à 20 parties en poids d'un acide organique ; et
(d) de 0 à 100 parties en poids d'un adoucissant.

2. Composition d'adhésif adhérant par pression selon la revendication 1, dans laquelle le copolymère séquencé comprend de 20 à 100% en poids d'un copolymère séquencé couplé de composé alcényle aromatique et de diène conjugué répondant à la formule générale :

$[(A\text{-}B)_m]_n$ X et/ou
$[(A\text{-}B\text{-}A')_m]_n$ X

et de 80 à 0% en poids d'un autre copolymère séquence.

3. Composition d'adhésif adhérant par pression selon la revendication 2, dans laquelle le rapport pondéral du copolymère séquencé composé couplé alcényle aromatique/diène conjugué et de l'autre copolymère séquencé est compris entre 30:70 et 100:0.

4. Composition d'adhésif adhérant par pression selon les revendications 1 à 3, dans laquelle ledit autre copolymère séquencé est au moins un copolymère séquencé de formule :

$(A\text{-}B)\text{-}_mA$, $(A\text{-}B)\text{-}_m$,
$(B\text{-}A)\text{-}_mB$, $[(A\text{-}B)_m]_{n''}$ Z et
$[(A\text{-}B\text{-}A)\text{-}_m]_{n''}$ Z

dans laquelle A représente une séquence d'un polymère de composé alcényle aromatique ou une séquence d'un copolymère de composé alcényle aromatique (composant principal) et d'un diène conjugué ; B représente une séquence d'un polymère de composé de diène conjugué ou une séquene d'un copolymère d'un diène conjugué (composant principal) et d'un composé alcényle aromatique ; Z représente le reste d'un agent de couplage ne contenant pas d'étain ; m est un nombre entier de 1 ou plus ; et n'' est un nombre entier de 1 à 6 qui correspond à la fonctionnalité de Z.

5. Composition d'adhésif adhérant par pression selon la revendication 4, dans laquelle ledit autre copolymère séquencé est un copolymère séquencé de formule $(A\text{-}B)_m$.

6. Composition d'adhésif adhérant par pression selon l'une quelconque des revendications 1 à 5, dans laquelle la quantité de l'agent d'adhésivité est de 50 à 150 parties en poids.

7. Composition d'adhésif adhérant par pression selon l'une quelconque des revendications 1 à 6, dans laquelle la quantité d'acide organique est de 0,01 à 20 parties en poids.

8. Composition d'adhésif adhérant par pression selon l'une quelconque des revendications 1 à 7, dans laquelle la quantité d'adoucissant est de 20 à 70 parties en poids.

9. Copolymère séquencé d'un composé alcényle aromatique couplé et de diène conjugué servant à la préparation d'un adhésif adhérant par pression tel que revendiqué dans l'une quelconque des revendications 1 à 8, présentant une teneur totale en composé alcényle aromatique combiné de 3 à 70% en poids, ayant une masse moléculaire en poids de 10.000 à 1.000.000 et répondant à la formule générale:

$[(A\text{-}B)_m]_n$ X et/ou
$[(A\text{-}B\text{-}A')_m]_n$ X

dans laquelle A et A', qui sont identiques ou différents, représentent chacun une séquence d'un copolymère de composé alcényle aromatique ayant une masse moléculaire moyenne en poids de 3000 à 200.000 ;
B représente une séquence d'un polymère de diène conjugué ou une séquence d'un copolymère diène conjugué/composé alcényle aromatique, contenant une proportion de diène conjugué d'au moins 50% en poids, ladite séquence présentant une masse moléculaire moyenne en poids de 7000 à 700.000 ;
X représente le reste d'un agent de couplage contenant de l'étain ou un mélange du reste d'un agent de couplage contenant de l'étain et du reste d'un agent de couplage ne contenant pas d'étain, le copolymère séquencé couplé contenant au moins 20% en poids d'un copolymère séquencé d'un composé alcényle aromatique couplé avec un composé d'étain et de diène conjugué ; et X représente le reste d'au moins un agent de couplage choisi parmi le chlorure stanneux, le chlorure stannique, le bromure stanneux, le bromure stannique, l'iodure stanneux, l'iodure stannique, le fluorure stanneux, le fluorure stannique, le trichlorure de méthylétain, le trichlorure de butylétain ou le dichlorure de dibutylétain ;
m est un nombre entier de 1 ou plus ; et
n est un nombre entier de 2 à 6 qui correspond à la fonctionnalité de X.

10. Copolymère selon la revendication 9, dans lequel la teneur totale en composé alcényle aromatique combiné est de 5 à 50% en poids.

11. Copolymère selon la revendication 9, dont la masse moléculaire est de 50.000 à 700.000.

12. Copolymère selon l'une quelconque des revendications 9 à 11, dans lequel la séquence A présente une masse moléculaire de 5000 à 50000 et la séquence B présente une masse moléculaire de 10.000 à 200.000.

13. Copolymère selon l'une quelconque des revendications 9 à 12, dans lequel la séquence B comporte de 2 à 10 séquences inclinées dans lesquelles la teneur en composé alcényle aromatique combiné augmente progressivement.

**14.** Copolymère selon l'une quelconque des revendications 9 à 13, dans lequel X contient de 20 à 100 moles% de résidu d'un agent de couplage contenant de l'étain.

**Patentansprüche**

**1.** Druckempfindliches Klebemittel, umfassend:

(a) 100 Gew.-Teile eines Blockcopolymers, enthaltend mindestens 20 Gew.-% eines gekuppelten Blockcopolymers aus einer alkenyl-aromatischen Verbindung und einem konjugierten Dien mit einem Gesamtgehalt an gebundener alkenyl-aromatischer Verbindung von 3 bis 70 Gew.-%, mit einem mittleren gewichtsmäßigen Molekulargewicht von 10 000 bis 1 000 000, und angegeben durch die allgemeine Formel:

$[(A\text{-}B)_m]_n$ X und/oder
$[(A\text{-}B\text{-}A')_m]_n$ X ,

wobei A und A' gleich oder verschieden sind und jeweils einen Block eines Polymers aus einer alkenyl-aromatischen Verbindung bedeuten, mit einem mittleren gewichtsmäßigen Molekulargewicht im Bereich von 3 000 bis 200 000;
B einen Block aus einem konjugierten Dienpolymer oder einen Block aus einem Copolymer aus einem konjugierten Dien und einer alkenyl-aromatischen Verbindung mit einem Anteill an konjugiertem Dien von zumindest 50 Gew.-% bedeutet, wobei der Block ein mittleres gewichtsmäßiges Molekulargewicht im Bereich von 7 000 bis 700 000 aufweist;
X den Rest eines zinnhaltigen Kupplungsmittels oder ein Gemisch des Restes eines zinnhaltigen Kupplungsmittels und des Restes eines nicht-zinnhaltigen Kupplungsmittels bedeutet, wobei das gekuppelte Blockcopolymer zumindest 20 Gew.-% eines mit einer Zinnverbindung gekuppelten Blockcopolymers aus einer alkenyl-aromatischen Verbindung und einem konjugierten Dien enthält;
m eine ganze Zahl von 1 oder mehr ist und n eine ganze Zahl von 2 bis 6 ist, entsprechend der Funktionalität von X;
(b) 20 bis 200 Gew.-Teile eines Klebrigmachers;
(c) 0 bis 20 Gew.-Teile einer organischen Säure und
(d) 0 bis 100 Gew.-Teile eines Weichmachers.

**2.** Druckempfindliches Klebemittel nach Anspruch 1, wobei das Blockcopolymer aus 20 bis 100 Gew.-% eines gekuppelten Copolymers aus einer alkenyl-aromatischen Verbindung und einem konjugierten Dien, angegeben durch die allgemeine Formel:

$[(A\text{-}B)_m]_n$ X und/oder
$[(A\text{-}B\text{-}A')_m]_n$ X

und 80 bis 0 Gew.-% eines anderen Blockcopolymers besteht.

**3.** Druckempfindliches Klebemittel nach Anspruch 2, wobei das Gewichtsverhältnis des gekuppelten Blockcopolymers aus der alkenyl-aromatischen Verbindung und dem konjugierten Dien zu dem anderen Blockcopolymer 30:70 bis 100:0 beträgt.

**4.** Druckempfindliches Klebemittel nach Anspruch 1 bis 3, wobei das andere Blockcopolymer mindestens ein Blockcopolymer ist der Formel:

$(A\text{-}B)\text{-}_mA$, $(A\text{-}B)\text{-}_m'$,
$(B\text{-}A)\text{-}_mB$, $[(A\text{-}B)_m]_n''$ Z und
$[(A\text{-}B\text{-}A)\text{-}_m]_n''$ Z

wobei A einen Block eines Polymers aus einer alkenyl-aromatischen Verbindung oder einen Block eines Copolymers aus einer alkenyl-aromatischen Verbindung (Hauptkomponente) und einem konjugierten Dien bedeutet, B einen Block eines Polymers aus einer konjugierten Dienverbindung oder einen Block aus einem Copolymer aus einem konjugierten Dien (Hauptkomponente) und einer alkenyl-aromatischen Verbindung bedeutet, Z den Rest eines nicht-zinnhaltigen Kupplungsmittels bedeutet, m eine ganze Zahl von 1 oder darüber ist und n'' eine ganze Zahl von 1 bis 6 ist, entsprechend der

Funktionalität von Z.

**5.** Druckempfindliches Klebemittel nach Anspruch 4, wobei das andere Blockcopolymer ein Blockcopolymer ist, angegeben durch die Formel $(A\text{-}B)_m$ .

**6.** Druckempfindliches Klebemittel nach einem der Ansprüche 1 bis 5, wobei die Menge an Klebrigmacher 50 bis 150 Gew.-Teile beträgt.

**7.** Druckempfindliches Klebemittel nach einem der Ansprüche 1 bis 6, wobei die Menge an organischer Säure 0,01 bis 20 Gew.-Teile beträgt.

**8.** Druckempfindliches Klebemittel nach einem der Ansprüche 1 bis 7, wobei die Menge an Weichmacher 20 bis 70 Gew.-Teile beträgt.

**9.** Gekuppeltes Blockcopolymer aus einer alkenyl-aromatischen Verbindung und einem konjugierten Dien zur Herstellung eines druckempfindlichen Klebemittels nach einem der Ansprüche 1 bis 8 mit einem Gesamtgehalt an gebundener alkenyl-aromatischer Verbindung von 3 bis 70 Gew.-% mit einem mittleren gewichtsmäßigen Molekulargewicht von 10 000 bis 1 000 000 und angegeben durch die allgemeine Formel:

$[(A\text{-}B)_m]_n$ X und/oder
$[(A\text{-}B\text{-}A')_m]_n$ X ,

wobei A und A' gleich oder verschieden sind und jeweils einen Block eines Polymers aus einer alkenyl-aromatischen Verbindung bedeuten, mit einem mittleren gewichtsmäßigen Molekulargewicht im Bereich von 3 000 bis 200 000;
B einen Block eines konjugierten Dienpolymers oder einen Block eines Copolymers aus einem konjugierten Dien und einer alkenyl-aromatischen Verbindung mit einem Anteill an konjugiertem Dien von zumindest 50 Gew.-% bedeutet, wobei der Block ein mittleres gewichtsmäßiges Molekulargewicht im Bereich von 7 000 bis 700 000 aufweist;
X den Rest eines zinnhaltigen Kupplungsmittels oder ein Gemisch des Restes eines zinnhaltigen Kupplungsmittels und des Restes eines nicht-zinnhaltigen Kupplungsmittels bedeutet, wobei das gekuppelte Blockcopolymer zumindest 20 Gew.-% eines mit einer Zinnverbindung gekuppelten Blockcopolymers aus einer alkenyl-aromatischen Verbindung und einem konjugierten Dien enthält;
und wobei X den Rest mindestens eines Kupplungsmittels bedeutet, ausgewählt aus Zinn-II-chlorid, Zinn-IV-chlorid, Zinn-II-bromid, Zinn-IV-bromid, Zinn-II-iodid, Zinn-IV-iodid, Zinn-II-fluorid, Zinn-IV-fluorid, Methylzinn-trichlorid, Butylzinn-trichlorid oder Dibutylzinn-dichlorid;
m eine ganze Zahl von 1 oder darüber ist und n eine ganze Zahl von 2 bis 6 ist, entsprechend der Funktionalität von X.

**10.** Copolymer nach Anspruch 9, wobei der Gesamtgehalt an gebundener alkenyl-aromatischer Verbindung 5 bis 50 Gew.-% beträgt.

**11.** Copolymer nach Anspruch 9, das ein Molekulargewicht von 50 000 bis 700 000 aufweist.

**12.** Copolymer nach einem der Ansprüche 9 bis 11, wobei der Block A ein Molekulargewicht von 5 000 bis 50 000 und der Block B ein Molekulargewicht von 10 000 bis 200 000 besitzt.

**13.** Copolymer nach einem der Ansprüche 9 bis 12, wobei der Block B 2 bis 10 keilförmig zulaufende (tapered) Blöcke aufweist, bei denen der Gehalt an gebundener alkenyl-aromatischer Verbindung nach und nach zunimmt.

**14.** Copolymer nach einem der Ansprüche 9 bis 13, wobei X 20 bis 100 mol% der Reste eines zinnhaltigen Kupplungsmittels enthält.

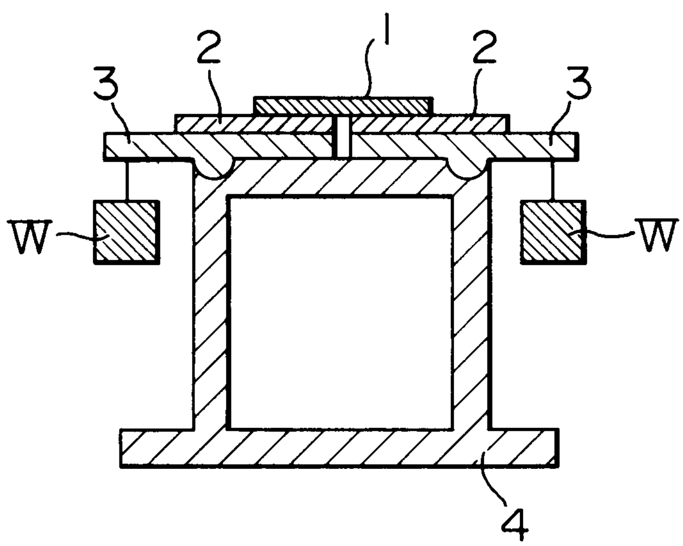
1
2
2
3
3
W
W
4